# EUROPEAN PATENT APPLICATION

(11) **EP 3 339 826 A1**
(43) Date of publication of application: **27.06.2018**
(21) Application number: 16306800.0
(22) Date of filing: 22.12.2016
(51) Int. Cl.: G01K 7/42, G01K 1/20

(54) **A SENSOR ARRANGEMENT FOR USING LUMINOSITY MEASUREMENTS IN A ROOM**

(71) Applicant: Netatmo, 92100 Boulogne Billancourt (FR)
(72) Inventor: GABRIEL, Chadi, 92160 Antony (FR); POTTER, Frédéric, 92200 Neuilly-sur-Seine (FR); PAOLI, Romain, 92190 Meudon (FR); ELVIRA, David, 91120 Palaiseau (FR)
(74) Representative: Nguyen-Van-Yen, Christian

(57) **Abstract**

The invention relates to a sensor arrangement that comprises a luminosity sensor that allows using luminosity measurements in a room. In an aspect of the invention, the luminosity sensor allows determining a level of sun radiations that allows correcting temperature measurements, in order to obtain an effective temperature of the room. In other aspects of the invention, luminosity measurements are processed by a processing logic that combines them with meteorological predictions to calculate parameters related to the impact of solar radiations on the temperature of the room, such as the orientation of the room, or the position of the sensor in the room.

## Description

### FIELD OF THE INVENTION

The present invention relates to the field of smart sensors. More specifically, it relates to improvements of temperature sensors.

### BACKGROUND PRIOR ART

Building Management Systems (BMS) relate to a range of technologies, having as objective to provide an automatic and intelligent behavior to various devices of a building. Building Management System technologies have a number of interesting applications, such as house automation (for example, setting the light on when a user enters a room), or energy saving (for example by a smart management of heating or electricity use).

A field of particular interest of Building Management System is the control of the temperature of a building, so that it remains as close as possible to a temperature setpoint. Such goal can be achieved by sensing the temperature of a room or a building, and sending commands to devices or systems having an impact on the temperature of the room or the building, such as for example heating systems or air conditioning systems.

European Patent application n° 16306798.6, filed the same day by the same applicant, discloses a device to control the temperature of a room using window shading devices (such as blinders, shutters, curtains of tinted films), in order to modify the amount of sunlight that enters the room, and thus the amount of heat provided by sun radiations. The device comprises a temperature sensor and calculates, based on predictions of sunlight and a room temperature model, commands to modify the state of the window shading device in order to let more or less sunlight and sun radiations enter the room. This provides an effective and energy efficient solution to control the temperature of a room.

This application, as well a number of applications in the field of Building Management Systems, requires a measure of the temperature of the room that is as representative as possible of an effective temperature of the room that is affected by air conduction and air convection as well. However, depending on the placement of the temperature sensor in the room, the temperature measurement may be affected by sun radiations if the temperature sensor is directly hit by sunlight. This renders the temperature measurement less representative of an average temperature of the room, as it contains a significant amount of the measured temperature that results from solar radiation.

The use of a temperature measurement that is not representative of the global temperature of the room may have a highly negative impact on a temperature control of the room, or any other application that requires an evaluation of the average temperature of the room.

However, existing solutions fail to disclose temperature measurements that are representative of the average temperature of the room, regardless of the position of the sun relative to the room or the temperature sensor.

In addition, the impact of the sun radiations on the temperature of the room is highly dependent on a number of factors. For example, the orientation of the room has a direct impact on the sun radiation that is received at different times of the day. A room oriented to the East will receive more solar radiations during the morning, unlike a room oriented to the West that will receive more solar radiations at the end of the day. Meanwhile, the position of the temperature sensor in the room has an important impact on temperature sensing. Indeed, the position defines the times of the day the temperature sensor may be hit directly by sunlight.

Such parameters characterizing the exposition of the room, or the solar exposition of a temperature sensor, have an important impact on applications that relate to the measurement or to the control of the temperature of a room.

Such parameters can be determined manually, by taking measurements in the room where a temperature sensor is placed. However, this is a complex procedure that may have to be performed by a professional.

Existing solutions fail to disclose a simple and efficient procedure that allows determining efficiently such parameters.

There is thus the need of a device that performs temperature measurements corrected for the effect of solar radiations. Meanwhile, there is also the need for a temperature sensing device that allows a simple and efficient determination of parameters that impact on the relationship between sun radiations, and the evolution of the temperature in the room and/or the temperature sensed by the temperature sensor.

### SUMMARY OF THE INVENTION

To this effect, the invention discloses a sensor arrangement to determine an effective indoor temperature of a room, the sensor arrangement comprising: a first sensor configured to obtain a measured temperature; a second sensor configured to obtain measured values of intensity of a physical field; a processing logic configured to calculate the effective indoor temperature of the room, based on the measured temperature and said measured values of intensity of a physical field.

Advantageously, the effective indoor temperature of the room is the sum of all contributions to the measured temperature except a direct impact of solar radiation to the sensor arrangement.

Advantageously, the processing logic is configured to calculate a direct impact of solar radiation to the measured temperature, based at least on said measured values of intensity of the physical field, and calculate the effective indoor temperature by subtracting said direct impact of solar radiation from said measured temperature.

Advantageously, said second sensor is a second temperature sensor located in a position in the sensor arrangement different from the position of the first sensor, and said measured values of intensity of the physical field are temperatures measured by said second sensor.

Advantageously, said second sensor is a luminosity sensor, and said measured values of intensity of the physical field are values measured values of of luminosity intensity comprising solar luminosity intensity.

Advantageously, a relationship between values of solar luminosity intensity and the direct impact of solar radiation to the measured temperature is calculated during a training phase, said training phase comprising comparing temperature differences between two measured temperatures, with and without solar radiations, and corresponding values of solar luminosity intensity.

The invention also discloses a sensor arrangement to determine at least one parameter characterizing the impact of solar radiations, said sensor arrangement comprising: one or more sensors configured to obtain measured values of intensity of one or more physical fields, said measured values of intensity of one or more physical fields being dependent upon the amount of solar radiations that hit the sensor arrangement; a communication link configured to send one or more timed series of measured values of intensity of one or more physical fields to a processing logic, said processing logic configured to: obtain timed series of a coefficient characterizing the intensity of solar radiations based on said one or more timed series of measured values of intensity of one or more physical fields, and; calculate said at least one parameter characterizing the impact of solar radiations, based on the one or more timed series of values of the coefficient characterizing the intensity of solar radiations, and solar meteorological predictions.

Advantageously, said at least one parameter characterizing the impact of solar radiations is an orientation of the room.

Advantageously, the processing logic is configured to calculate a time of a maximum of one or more timed series of values of the coefficient characterizing the intensity of solar radiations, and calculate an orientation of said room based on said time of the maximum of said one or more timed series of said values of a coefficient characterizing the intensity of solar radiations, and solar meteorological predictions.

Advantageously, said processing logic is further configured to determine whether sunlight enters directly in the room based on an intensity of said value of the maximum of said one or more timed series of said values of a coefficient characterizing the intensity of solar radiations.

Advantageously, the sensor arrangement comprises a luminosity sensor configured to obtain measured values of luminosity intensity, said one or more timed series of measured values of intensity of one or more physical fields are one or more timed series of measured values of luminosity intensity comprising solar luminosity intensity, and wherein said coefficient characterizing the intensity of solar radiations is solar luminosity intensity.

Advantageously, said values of solar luminosity intensity are said measured values of luminosity intensity.

Advantageously, said luminosity sensor is configured to measure luminosity at a wavelength representative of solar light.

Advantageously, said processing logic is configured to calculate values of solar luminosity intensity based on said measured values of solar intensities.

Advantageously, said processing logic is configured to calculate a contribution of artificial light to the measured values of luminosity intensities, and calculate the values of solar luminosity intensity, by at least removing said contribution of artificial light from the measured values of luminosity intensities.

Advantageously, said processing logic is configured to: calculate a speed of change of the measured values of luminosity intensities; determine, based on said speed of change of the measured values of luminosity intensities, if a change of the measured values of luminosity intensities is due to artificial light; if the change of the measured values of luminosity intensities is due to artificial light, calculate the contribution of artificial light to the measured values of luminosity intensities.

The invention also discloses a method to determine an effective indoor temperature of a room, said method comprising: using a first sensor to obtain a measured temperature; using a second sensor to obtain measured values of intensity of a physical field; calculating said effective indoor temperature of the room, based on said measured temperature and said measured values of intensity of a physical field.

Advantageously, said second sensor is luminosity sensor, and said measured values of intensity of the physical field are configured to obtain values measured values of of luminosity intensity comprising solar luminosity intensity.

The invention also discloses a method to determine at least one parameter characterizing the impact of solar radiations, said method comprising: using one or more sensors to obtain measured values of intensity of one or more physical fields, said measured values of intensity of one or more physical fields being dependent upon the amount of solar radiations that hit the sensor arrangement; calculating said at least one parameter characterizing the impact of solar radiations, based on said one or more timed series of values of a coefficient characterizing the intensity of solar radiations, and solar meteorological predictions, said values of a coefficient characterizing the intensity of solar radiations being obtained based on said measured values of intensity of one or more physical fields.

Advantageously the method comprises using a luminosity sensor in a sensor arrangement to obtain measured values of luminosity intensity, and wherein said one or more timed series of values of a coefficient characterizing the intensity of solar radiations are one or more timed series of measured values of of luminosity intensity comprising solar luminosity intensity, and solar meteorological predictions.

Advantageously, said values of solar luminosity intensity are said measured values of luminosity intensity.

Advantageously, the method further comprises an intermediary step of calculating values of solar luminosity intensity based on said measured values of luminosity intensities.

The invention allows correcting temperature measurements from the effect of sun radiations.

The invention allows measuring a temperature representative of the air conduction and air convection in a room.

The invention improves any application that uses measurements of a temperature of a room, especially room temperature control.

The invention allows determining parameters that have an impact on the effect of sun radiations on the room and/or the temperature sensing device.

The invention allows determining the orientation of a room.

The invention allows the separation of solar radiation from that of the artificial light.

### BRIEF DESCRIPTION OF THE DRAWINGS

The invention will be better understood and its various features and advantages will emerge from the following description of a number of exemplary embodiments and its appended figures in which:
- Figure 1 displays an example of a room comprising windows, window shading devices, and a sensor arrangement to determine an effective indoor temperature of the room in a number of embodiments of the invention;
- Figure 2 displays an example of a sensor arrangement to determine an effective indoor temperature of a room in a number of embodiments of the invention;
- Figure 3a displays a functional architecture of a sensor arrangement to determine an effective indoor temperature of a room in a number of embodiments of the invention;
- Figure 3b displays a physical architecture of a sensor arrangement to determine an effective indoor temperature of a room in a number of embodiments of the invention;
- Figure 4 displays a flow chart of a method according to the invention in some of its embodiments;
- Figures 5a, 5b, 5c and 5d display four examples of determination of parameters that have an impact on the exposition of the room and/or the temperature sensing device to the sun radiations;
- Figure 6 displays a flow chart of a method to determine at least one parameter characterizing the impact of solar radiations according to the invention in some of its embodiments.

### DETAILED DESCRIPTION OF THE INVENTION

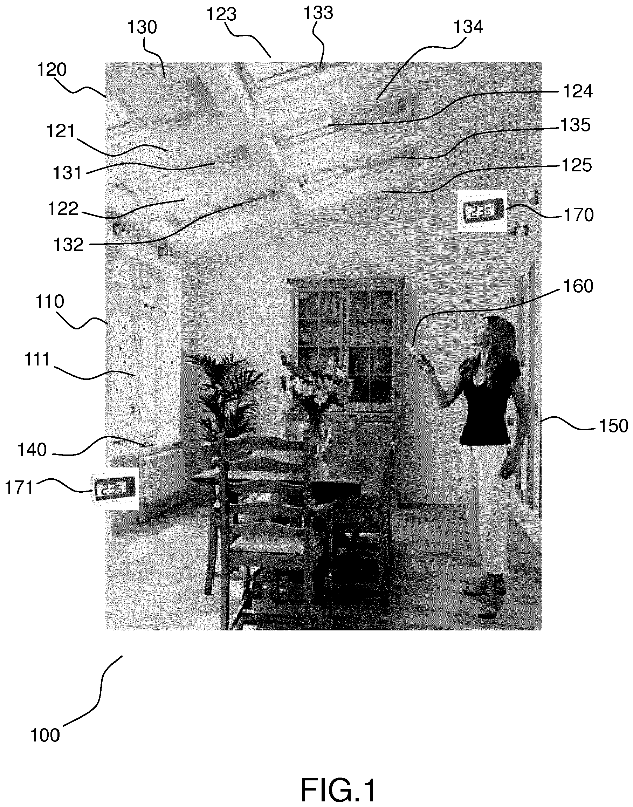

Figure 1 displays an example of a room comprising windows, window shading devices, and a device configured to measure the temperature of the room in a number of embodiments of the invention.

The room 100 comprises vertical windows 110, 111, and roof windows 120, 121, 122, 123, 124, 125. The roof windows are equipped with window shading devices, in this example adjustable blinders 130, 131, 132, 133, 134, 135. The positions of the blinders 130, 131, 132, 133, 134, 135 allow more or less sunlight entering the room, and thus modify the amount of input solar radiation that may heat the room. The room also comprises a heater 140. A user 150 uses a remote control that may control devices that have an impact on the temperature of the room, for example the blinders 130, 131, 132, 133, 134, 135, or the heater 140. In a number of embodiments of the invention, the remote control 160 may also control a state of one or more of the vertical windows 110, 111, or the roof windows 120, 121, 122, 123, 124, 125. For example it may control a state (Open/Closed) of a window, or an angle of opening. In some embodiments, a plurality of remote controls may be used to control the different equipments of the room.

The room also comprises one or more sensor arrangements, for example the sensor arrangement 170 or the sensor arrangement 171. These sensor arrangements may be placed in different places in the room, for example on a wall in the case of device 170, or below the windows in the case of device 171. The sensor arrangements comprise luminosity sensors. They may also comprise additional sensors such as temperature sensors, humidity sensors, or CO₂ concentration sensors. The sensor arrangements 170 and 171 may be configured to communicate with the remote control 160, for example using a radio link, or a Local Area Network (LAN), for example using a Wi-Fi, Bluetooth, or a Zigbee connexion. This communication link may for example be used by the sensor arrangements 170 or 171 to send measurements, for example temperature measurements, to the remote control 160. In other embodiments of the invention, the remote control and temperature sensors are packaged within a single arrangement.

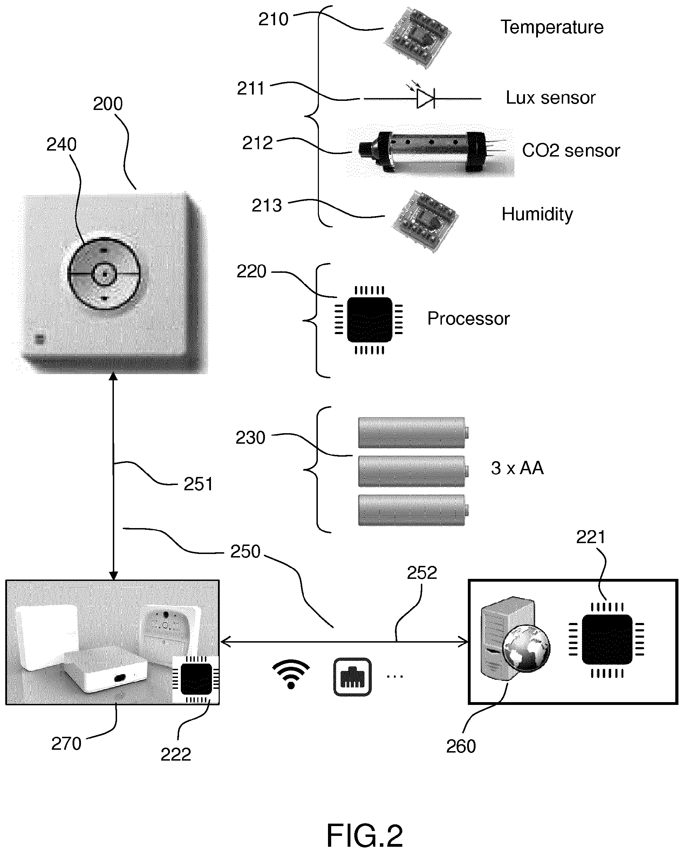

The figure 2 displays an example of a sensor arrangement to determine an effective indoor temperature of a room in a number of embodiments of the invention.

The sensor arrangement 200 comprises one or more sensors. It may comprise for example one or more of a luminosity sensor 211, a temperature sensor 210, a CO₂ sensor 212, or a humidity sensor 213. In some embodiments of the invention, the sensor arrangement comprises additional sensors such as a sound meter or a barometer.

The luminosity sensor 211 may be any sensor that allows converting luminosity into a signal, such as a sensor comprising photodiodes, phototransistors, optosensors, ALS (Ambient Light Sensing) sensors. These sensors generate a signal whose intensity or frequency depends on the intensity of luminosity sensed. The luminosity sensor may be configured to sense luminosity for a single wavelength, a plurality of wavelengths, a range of wavelengths, or a plurality of ranges of wavelengths. The luminosity sensor 211 may sense the luminosity at visible wavelength, or at non-visible (i.e infrared, ultraviolet, X-ray, etc...).

In a number of embodiments of the invention, the luminosity measurements are first obtained in the form of a signal, for example an electric signal. In a number of embodiments of the invention, the electric signal is first amplified using a gain. In a number of embodiments of the invention, a fixed gain is applied to convert the signal into luminosity values. In other embodiments of the invention, a variable gain is applied, while avoiding a saturation of the signal at the output of the amplification. In an embodiment of the invention, a strong gain is initially set, then, if the signal at the output of the sensor is saturated, the luminosity sensor 211 is configured to lower the gain until the signal is not saturated anymore. This allows tailoring the gain of the luminosity sensor to the actual luminosity of the environment of the luminosity sensor, in order to have a full range of luminosity measurements, without saturation of the signal of the luminosity sensor. The intensity or frequency of the signal is then converted into luminosity values, usually in Lux.

The sensor arrangement 200 comprises a source of electrical power, for example 3 AA batteries 230. According to various embodiments of the invention, every suitable source of electric power may be used, for example an electrical outlet, or a battery that is charged using a solar panel.

In a number of embodiments of the invention, the sensor arrangement also serves as a remote control for window shading devices such as the blinders 130, 131, 132, 133, 134 and 135. For example, the buttons 240 may be configured to generate commands to lower or rise the blinders 130, 131, 132, 133, 134 and 135 when manually pressed by a user. In other embodiments of the invention, the processing logic 220 is configured to automatically calculate commands of window shading devices according to at least a temperature of the room. For example, the European patent application n° 16306798.6 filed the same day by the same applicant discloses a remote control of window shading devices that controls a state of window shading devices based on temperature measurements, in order to reach a setpoint temperature.

In a number of embodiments of the invention, the sensor arrangement also comprises a communication link 250 to communicate with external devices. The communication link 250 may use any type of suitable port to communicate data with an external device 260, such as for example a Bluetooth port, a radio antenna, a Wi-Fi antenna, or an Ethernet port. The communication with an external device may use any suitable type of connection, for example a device-to-device communication, a communication using a Local Area Network (LAN), or an Internet connection. The external device 260 may be any device equipped with communication and computing capabilities, such as a server, a workstation, or a mobile device such as a tablet or a smartphone. The external device 260 comprises a processing logic 221. The external device may connect to a LAN connecting the sensors/shutters through a gateway 270. The gateway 270 may comprise a processing logic 222. The communication link 250 to communicate with external devices may be split in different sections. For example, there may be a first link 251 between the sensor arrangement 200 and the gateway 270, which may be for example a radio link, and a second link 252 between the gateway 270 and the external device 260, that may use an Internet connection.

The sensor arrangement 200 also comprises a communication link to a processing logic. According to various embodiments of the invention, the processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium.

In a number of embodiments of the invention, the sensor arrangement 200 comprises a processing logic 220, and the communication link to a processing logic is an internal communication link to the processing logic 220. In other embodiments of the invention, the processing logic is located in a device other than the sensor arrangement 200, and the communication link to the processing logic is a link to the device other than the sensor arrangement 200.

For example, the processing logic may be the processing logic 221 of the external device 260, and the communication link to the processing logic the communication link 250 to the external device 260. The processing logic may also be the processing logic 222 in the gateway, and the communication link the communication link 251 to the gateway. Any suitable link to a processing logic in a device other than the sensor arrangement 200 may be used.

The measured values Lₘₑₐₛ of luminosity intensity comprise solar luminosity intensity Lₛₒₗ. In certain circumstances, they may also comprise other components, such as intensities of artificial light Lₐᵣₜ. In a number of applications of the invention, such as the correction of temperature measurements, or the determination of parameters of the room, the values of luminosity need to be as representative as possible to solar luminosity that hits the sensor arrangement.

In a number of embodiments of the invention, the values of solar luminosity intensity Lₛₒₗ are equal to the measured values of luminosity intensity Lₘₑₐₛ, that are thus used directly for further calculations.

In certain circumstances, for example when the sensor arrangement is located in a room wherein there is a very powerful source of artificial light, the measured values of luminosity intensity Lₘₑₐₛ may not always be representative of the amount of solar light that hits the sensor arrangement. Indeed, when the powerful source of artificial light is ON, the measured values of luminosity intensity Lₘₑₐₛ may be formed of a combination of solar light and artificial light. Directly using the measured values of luminosity intensity Lₘₑₐₛ as if they were representative of solar luminosity may thus lead to inexact results.

According to various embodiments of the invention, different techniques can be used to overcome this issue.

In a number of embodiments of the invention, the luminosity sensor 211 is configured to measure the luminosity at a wavelength representative of solar light. More specifically, the sources of artificial lights usually emit light in a spectrum that is much narrower than the spectrum of solar light. Thus, the luminosity sensor can be configured to measure the luminosity at a wavelength that is present in solar light, but not in the light emitted by artificial source, in order that the measured values of luminosity intensity Lₘₑₐₛ are representative of solar light, but not of artificial lights.

In other embodiments of the invention, one of the processing logic 220 or 221 is configured to calculate values of solar luminosity intensity Lₛₒₗ based on said measured values of luminosity intensities Lₘₑₐₛ. In some embodiments of the invention, both the calculation of solar luminosity intensity Lₛₒₗ and further calculation based on solar luminosity intensity Lₛₒₗ are performed in the same processing logic 220 or 221. In other embodiments of the invention, the processing logic 220 is configured to calculate values of solar luminosity intensity Lₛₒₗ based on measured values of luminosity intensities Lₘₑₐₛ, and the values of solar luminosity intensity Lₛₒₗ are sent to the processing logic 221 for further calculations.

Different methods are possible to calculate values of solar luminosity intensity Lₛₒₗ based on said measured values of luminosity intensities Lₘₑₐₛ. In an embodiment of the invention, the luminosity sensor measures luminosity intensities at two or more wavelengths, for example in visible light, and infrared light. A ratio of luminosity intensities at the different wavelengths for solar light can be established. If the luminosity at one of the wavelengths is significantly higher than expected regarding the intensity values of light at the other wavelengths, it can be inferred that a source of artificial light is ON, and the corresponding contribution of artificial light to the measured values of luminosity can be removed, in order to obtain values of solar luminosity intensity Lₛₒₗ.

In another embodiment of the invention, the processing logic 220 or 221 is configured to detect whether the light is representative of sunlight or artificial light due to changes of the intensity of light. Indeed, changes of luminosity caused by changes of solar luminosity intensities are progressive, while changes of luminosity due to artificial light are usually sudden. For example, a change of measured values of intensities Lₘₑₐₛ may occur if the position of the sun changes so that the sunlight enters a window and hits directly the sensors arrangement. In this case, the increase of measured values of intensities will be progressive: they will keep increasing all the time that the sun progressively enters the window. On the other hand, if a lamp is switched ON and the light emitted by the lamp hits the sensor arrangement, the measured values of intensities Lₘₑₐₛ will increase very suddenly.

In an embodiment of the invention, the processing logic 220 or 221 is configured, in order to calculate the values of solar luminosity intensity Lₛₒₗ, to:
- calculate a speed of change of the measured values of luminosity intensities Lₘₑₐₛ. This can be performed in different ways. For example, the processing logic can be configured to calculate differences of measured values of luminosity intensities between successive measured values; Determine, based on said speed of change of the measured values of luminosity intensities Lₘₑₐₛ, if a change of the measured values of luminosity intensities is due to artificial light. This can be performed by comparing said difference of measured values to a threshold of differences. Differences above a threshold can thus be considered as due to an artificial light. According to various embodiments of the invention, the comparison can be performed for each difference, or by comparing an effective of a number of successive differences over a time window to a threshold;
- if the change of the measured values of luminosity intensities is due to artificial light, calculate a contribution of artificial light Lₐᵣₜ to the measured values of luminosity intensities Lₘₑₐₛ. The contribution of artificial light Lₐᵣₜ to the measured values of luminosity intensities can be calculated for example by calculating the difference between measured values of luminosity intensities Lₘₑₐₛ before and after the artificial light is switched ON. For example, a difference can be performed between a measured value after the last difference above the threshold, and a measured value before the first difference below the threshold;
- calculate the values of solar luminosity intensity Lₛₒₗ, by at least removing said contribution of artificial light Lₐᵣₜ to the measured values of luminosity intensities Lₘₑₐₛ.

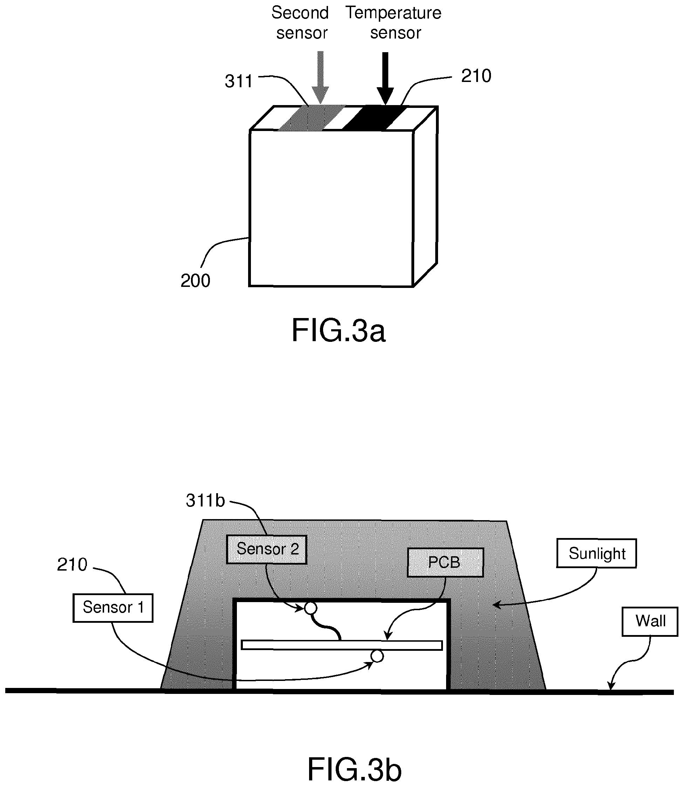

Figure 3a displays a functional architecture of a sensor arrangement to determine an effective indoor temperature of a room in a number of embodiments of the invention.

The temperature measured by a temperature sensor in a sensor arrangement is dependent upon the position of the sensor arrangement in the room. In particular, a temperature sensor in a sensor arrangement may provide biased measurements if it is hit by sunlight, because it is locally heated by the radiations of the sun. For example, temperature sensors in the sensor arrangements 170 and 171 may provide very different temperature measurements, if the sensor arrangement 170 is hit by sunlight while the sensor arrangement 171 is not.

One aspect of the invention is to provide a sensor arrangement that provides values of an effective indoor temperature of the room. The effective indoor temperature can be considered as representative of the overall temperature of the room. For example, the effective indoor temperature of the room may be the average temperature of the room, the temperature in the middle of the room, or the temperature that would be sensed if the sensor arrangement were located outside the direct radiations of the sun. In a number of embodiments of the invention, the effective indoor temperature of the room is a temperature generated by air conduction and air convection within the room. The effective indoor temperature may also be an apparent or "feels like" temperature, that takes into account the humidity, but not the immediate radiations of the sun.

In order to achieve this goal, the sensor arrangement comprises the temperature sensor 210 configured to obtain a measured temperature Tₘₑₐₛ. Conversely, a second sensor 311 configured to obtain measured values Pₘₑₐₛ of intensity of a physical field. The second sensor may be any sensor that allows obtaining an indication relative to the amount of solar radiation that hits the sensor arrangement. The second sensor may be for example the luminosity sensor 211, a radiation sensor, or a second temperature sensor. Furthermore, the processing logic 220 is configured to calculate the indoor effective temperature Tᵢₙ of the room, based on the measured temperature Tₘₑₐₛ and said measured values (Pₘₑₐₛ) of intensity of a physical field.

In a number of embodiments of the invention, the second sensor is the luminosity sensor 211, and measured values Pₘₑₐₛ of intensity of the physical field are values measured values of Lₘₑₐₛ of luminosity intensity comprising solar luminosity intensity Lₛₒₗ.. The use of measured values of solar luminosity intensity thus allows the sensor arrangement having information regarding the amount of sun radiations that hits the sensor arrangement, and thus obtaining an effective indoor temperature that does not suffer the bias sensing in part the sun radiations. In other embodiments of the invention, information regarding the amount of sun radiations that hits the sensor arrangement can be obtained by other sensors such as a radiation sensor, or a comparison between two temperature sensors in the sensor arrangement.

In a number of embodiments of the invention, the temperature sensor 210 senses a measured temperature Tₘₑₐₛ at the surface of the sensor arrangement, and the luminosity sensor 211 is configured to obtain measured values Lₘₑₐₛ of luminosity intensity at the surface of the sensor arrangement. Other embodiments are possible. For example, one of the the temperature sensor 210 or the luminosity sensor may be configured to obtain measured values Lₘₑₐₛ of luminosity intensity or measured temperature Tₘₑₐₛ above the surface of the sensor arrangement. The temperature sensor 210 and the luminosity sensor 211 may be located at the same point, withtin a redefined distance, or at any point in the sensor arrangement, provided that the luminosity sensor 211 provides measured values Lₘₑₐₛ of luminosity intensities providing a reliable insight of the solar luminosity hitting the temperature sensor 210.

According to various embodiments of the invention, the sensor arrangement may determine a single value of the effective indoor temperature. It may display this value on a display screen. It may also determine successive values of indoor temperature, for example at regular intervals determined by a sampling rate.

One underlying assumption of the invention is that the measured temperature Tₘₑₐₛ is the sum of a number of different contributions. According to various embodiments of the invention, different contributions may be taken into account, for example a contribution of air conduction, a contribution of air convection, a contribution of solar radiation that directly hits the temperature sensor, or the housing of the sensor arrangement, or a contribution of thermal radiation that is not caused by the sun, such as thermal radiation that is generated by radiators, ovens, etc...

In a number of embodiments of the invention, the processing logic is thus configured to calculate a direct impact Trad of solar radiation to the measured temperature, that corresponds to the contribution of solar radiation to the measured temperature, and calculate the effective indoor temperature Tᵢₙ by substracting said direct impact Trad of solar radiation from said measured temperature Tₘₑₐₛ.

The direct impact Trad of solar radiation to the measured temperature can be calculated based at least on measured values Pₘₑₐₛ of intensity of a physical field. For example, it can be calculated based on measured values of luminosity intensity Lₘₑₐₛ comprising solar luminosity intensity Lₛₒₗ. Indeed, the values of solar luminosity intensity Lₛₒₗ provide an insight of the amount of solar radiations that directly hit the housing of the sensor arrangement, and thus allow calculating the direct impact Trad of solar radiation to the measured temperature. As highlighted above, values of solar luminosity intensity Lₛₒₗ may be either measured values of luminosity intensity Lₘₑₐₛ, or values calculated in order to remove contributions of artificial lights to measured values of luminosity intensity Lₘₑₐₛ. A number of possible embodiments to determine values of solar luminosity intensities Lₛₒₗ based on measured values of luminosity intensity Lₘₑₐₛ are discussed with reference to figure 2.

Different embodiments are possible to calculate the direct impact Trad of solar radiation to the measured temperature based at least on measured values Pₘₑₐₛ of intensity of a physical field.

In an embodiment of the invention, the relationship between the direct impact Trad of solar radiation to the measured temperature is calculated based on values of solar luminosity intensity Lₛₒₗ. The relationship between values of solar luminosity intensity Lₛₒₗ and the direct impact Trad of solar radiation to the measured temperature can be determined for example during a training phase. The training phase may consist for example in performing measurements of temperature Tₘₑₐₛ, and calculating values of solar luminosity intensity Lₛₒₗ at a time when the sun hits directly the sensor arrangement, then closing a blinder, shutter, or hiding sunlight in any way, and performing a measurements of temperature Tₘₑₐₛ unaffected by sunlight.

It is then possible to calculate a difference T_{diff} of temperature, between measurements affected by sunlight, and measurements unaffected by sunlight, along with a corresponding value of solar luminosity intensity Lₛₒₗ. Under the assumption that the difference T_{diff} of temperature is representative of the contribution of solar radiation to temperature Trad, it is then possible to determine, using one or more executions of the measurement, a relationship between Lₛₒₗ and Trad. It is possible to use a number of different methods to determine the relationship between Lₛₒₗ and Trad. For example, it is possible to perform a linear regression using a plurality of measurements. It is also possible to train a machine learning algorithm with a number of different measurements. A skilled man may imagine any suitable method for calculating the relationship.

According to various embodiments of the invention, the measurement of temperature unaffected by sunlight can be at different times after hiding the sunlight, provided that the elapsed duration between measurements with and without sunlight is low enough, so that all the contributions to the temperature except direct solar radiations are not significantly different between the two measurements. For example, the measurements without sunlight may be performed immediately after the sunlight has been hidden.

In some cases, the housing of the sensor arrangement may have been significantly heated by direct radiations of sunlight, and the sensor arrangement remains, immediately after the sunlight has been hid, hotter than it would have been if was not hit by direct solar radiations. This remaining heat of the surface of the sensor arrangement may have an impact on the temperature measurements. In order to remove this impact, in some embodiments of the invention, a short time elapses between the time the sunlight is hidden, and the time when the measurement without sunlight is performed, in order to let the surface of the sensor arrangement cool from the excess heat that is caused from direct sunlight radiations. The duration may be predefined, for example to have a value high enough to let the surface of the sensor arrangement cool, and short enough, so that the other contributions to temperature remained similar to those of the measurement with sunlight. It is also possible to check the variations of measurements of temperature Tₘₑₐₛ. In cases wherein the housing of the sensor arrangement kept heat from direct solar radiations, the measurements of temperature Tₘₑₐₛ are expected to decrease rapidly, until there is no remaining heat from direct solar radiations, then remain fairly constant. In a number of embodiments of the invention, the measurement of temperature without solar radiations is performed, when measurements of temperature Tₘₑₐₛ remain fairly constant.

In some embodiments of the invention, the measurements for determining the relationship between Lₛₒₗ and Trad can be performed at any time the sensor arrangement is known to be directly hit by sunlight. In some embodiments of the invention, they are for example performed when both Tₘₑₐₛ, Lₛₒₗ have a high value. In other embodiments of the invention, the training is performed once. In still other embodiments of the invention, the training is performed a plurality of times, for example every week, every 15 days, or every month, in order to keep a relationship between Lₛₒₗ and Trad as accurate as possible.

The same principle can be applied to any sensor that provides a direct insight of the amount of solar radiation.

Figure 3b displays a physical architecture of a sensor arrangement to determine an effective indoor temperature of a room in a number of embodiments of the invention.

The sensor arrangement 300b displayed in figure 3b comprises the temperature sensor 210, and a second temperature sensor 311b located in a different location in the sensor arrangement. In this example, the sensor 311b is located on the housing of the sensor arrangement, while the sensor 210 is located at the middle of the sensor arrangement. The two sensors 210 and 311 b are located at two different sides of a PCB (Printed Circuit Board).

In the embodiment displayed in figure 3b, the measured values Pₘₑₐₛ of intensity of the physical field are temperatures measured by said second sensor Tₘₑₐₛ₂. Since the first temperature sensor 210 and the second temperature sensor 311 b are located in two different locations in the sensor arrangement, they are affected differently by solar radiations. In an embodiment of the invention, the first temperature sensor 210 is located near the center of the sensor arrangement, while the second sensor 311 b is located at or near the surface of the sensor arrangement, and is thus impacted directly by solar radiations.

In a number of embodiments of the invention, the processing logic 220, 221 is configured to calculate the contribution of solar radiation to temperature Trad, based on a relationship between the temperature measurements Tₘₑₐₛ from the first temperature sensor 210, and the temperature measurements Tₘₑₐₛ₂. For example, it may be configured to calculate a difference ΔT between the temperature measurements Tₘₑₐₛ from the first temperature sensor 210, and the temperature measurements Tₘₑₐₛ₂ from the second sensor 311 b, and calculate the contribution of solar radiation to temperature Trad based on this difference ΔT. The calculation of the contribution of solar radiation to temperature Trad may also be based, for example, on a ratio between the temperature measurements Tₘₑₐₛ from the first temperature sensor 210, and the temperature measurements Tₘₑₐₛ₂, a non linear relation between the temperature measurements Tₘₑₐₛ from the first temperature sensor 210, and the temperature measurements Tₘₑₐₛ₂ from the second temperature sensor 311 b, or any relevant function of the temperature measurements Tₘₑₐₛ from the first temperature sensor 210, and the temperature measurements Tₘₑₐₛ₂ from the second sensor 311 b.

According to various embodiments of the invention, the contribution of solar radiation to temperature Trad can be calculated in different ways based on the temperature measurements Tₘₑₐₛ from the first temperature sensor 210, and the temperature measurements Tₘₑₐₛ₂ from the second sensor 311b. For example, a relationship between Tₘₑₐₛ, Tₘₑₐₛ₂ and Trad can be established during a training phase. As explained above, it is possible to calculate Trad during a training phase, by successively opening and closing a window shading device and observing the differences of measurements of temperature from the first temperature sensor 210 with the window shading device closed. It is thus possible to determine, during the training phase, based on one or more measurements of Tₘₑₐₛ and Tₘₑₐₛ₂, a relationship between Tₘₑₐₛ, Tₘₑₐₛ₂ and Trad. This determination may comprise the calculation of the difference ΔT between the temperature measurements Tₘₑₐₛ from the first temperature sensor 210, and the temperature measurements Tₘₑₐₛ₂ from the second sensor 311 b, and a determination of a relationship between ΔT and Trad.

Another option for the training phase consists in performing temperature measurements Tₘₑₐₛ from the first temperature sensor 210, temperature measurements Tₘₑₐₛ₂ from the second sensor 311 b, and temperature measurements T_{ref} from a third sensor that provides a reference temperature. The measurements T_{ref} can be performed by a sensor outside the sensor arrangement, that measure a temperature considered as representative of the temperature reference of the room. For example, the reference measurements T_{ref} can be performed by a sensor in the middle of the room, which is not hit by the sun. The contribution Trad of solar radiations to the temperature can thus be calculated as the difference between the temperature measurements from the first temperature sensor 210, and the reference measurements: Trad = Tₘₑₐₛ - T_{ref}. The relationship between Tₘₑₐₛ, Tₘₑₐₛ₂ and T_{ref} can then be established.

In an embodiment of the invention, this training phase can be performed on each sensor arrangement. In other embodiments of the invention, the relationship between Tₘₑₐₛ, Tₘₑₐₛ₂ and T_{ref} is considered as constant for a model of sensor arrangement. The training phase can thus be performed once for a whole series of sensor arrangements, and used for all sensor arrangements of the series

In yet other embodiments of the invention, the relationship between Tₘₑₐₛ, Tₘₑₐₛ₂ and Trad can be determined theoretically, using for example the material and color of the housing of the sensor arrangement, the surface of the housing of the sensor arrangement, and the distance of each temperature sensor from the housing of the sensor arrangement.

In other embodiments of the invention, the relationship between ΔT and Trad can be determined theoretically, by analyzing for example the material and width of the housing of the sensor arrangement, and/or the distance between the two temperature sensors.

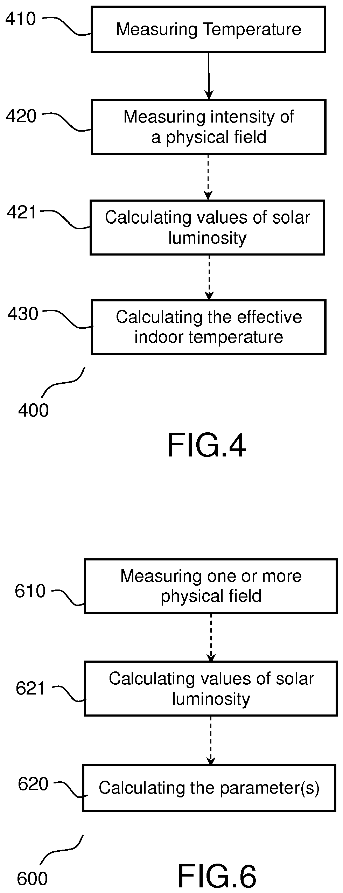

Figure 4 displays a flow chart of a method according to the invention in some of its embodiments.

The method 400 is a method to determine an effective indoor temperature Tᵢₙ of a room.

The method 400 comprises a first step 410 of using a first sensor to obtain a measured temperature Tₘₑₐₛ. The first sensor can be the temperature sensor 210.

The method 400 comprises a second step 420 of using a second sensor to obtain measured values Pₘₑₐₛ of intensity of a physical field. The second sensor can be for example the luminosity sensor 211, and the measured values Pₘₑₐₛ of intensity of the physical field can be measured values of Lₘₑₐₛ of luminosity intensity comprising solar luminosity intensity Lₛₒₗ.

In a number of embodiments of the invention, wherein the measured values Pₘₑₐₛ of intensity of the physical field can be measured values of Lₘₑₐₛ of luminosity intensity comprising solar luminosity intensity Lₛₒₗ, the method 400 comprises an intermediary step 421, after the second step 420, of calculating values of solar luminosity intensity Lₛₒₗ based on said measured values of luminosity intensities Lₘₑₐₛ. The calculation of values of solar luminosity intensity Lₛₒₗ based on measured values of Lₘₑₐₛ of luminosity intensity can be performed in different ways, that have been discussed with reference to figure 2.

The method 400 comprises a third step 430 of calculating said effective indoor temperature Tᵢₙ of the room, based on said measured temperature Tₘₑₐₛ and said measured values Pₘₑₐₛ of intensity of a physical field. According to various embodiments of the invention, this calculation is performed on measured values of Lₘₑₐₛ of luminosity intensity comprising solar luminosity intensity Lₛₒₗ. The values of solar luminosity intensity Lₛₒₗ can be values of luminosity intensity Lₘₑₐₛ, or values of solar luminosity intensity Lₛₒₗ calculated based on values of luminosity intensity Lₘₑₐₛ at the intermediary step 421.

All the embodiments discussed above can be applied to the method 400. The method 400 can be performed by the sensor arrangement 200, but also by other arrangements. For example, the method 400 can be performed using a luminosity sensor and a temperature sensor in different arrangements, provided that the luminosity sensor is close enough to the temperature sensor to provide an insight of the solar radiations heating the temperature sensor. Similarly, the calculation of the effective indoor temperature Tᵢₙ of the room can be performed by a processing logic located in the same housing than the sensors, or the measured values of temperature and luminosity can be sent to a processor located in another housing to calculate the effective indoor temperature. The calculation of the effective indoor temperature Tᵢₙ of the room can also be performed using measurements of temperature from two different temperature sensors, at two different locations within the sensor arrangement.

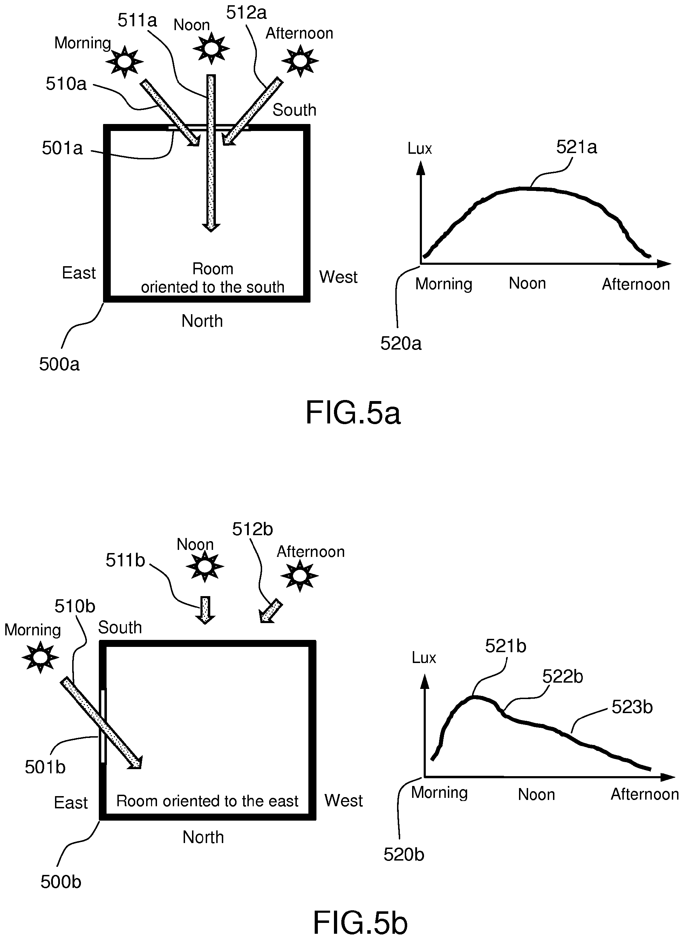

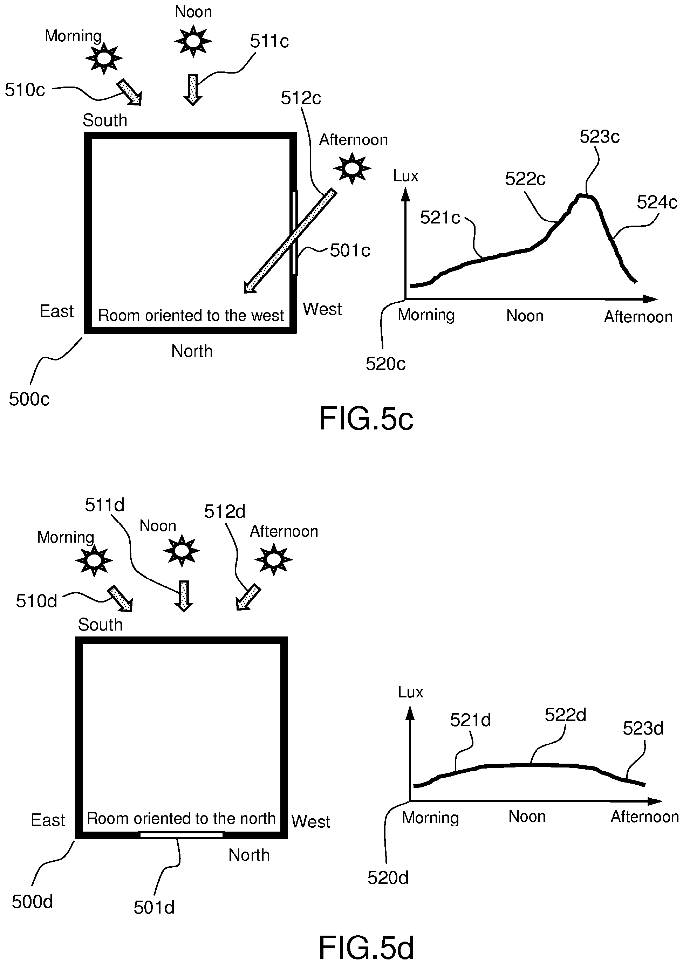

Figures 5a, 5b, 5c and 5d display four examples of determination of parameters that have an impact on the exposition of the room and/or the temperature sensing device to the sun radiations.

As highlighted above, a number of parameters have an impact on the way the room is impacted by solar radiations and/or how the sensor arrangement is impacted by solar radiations.

In an aspect of the invention, the sensor arrangement 200 comprises one or more sensors configured to obtain measured values Pₘₑₐₛ of intensity of one or more physical fields, said measured values of intensity of one or more physical fields being dependent upon the amount of solar radiations that hit the sensor arrangement.

The sensor arrangement 200 uses a communication link to send one or more timed series of measured values Pₘₑₐₛ of intensity of one or more physical fields to a processing logic 220, 221. The processing logic is configured to obtain timed series of a coefficient characterizing the intensity of solar radiations P_{rad} based on said one or more timed series of measured values Pₘₑₐₛ of intensity of one or more physical fields, and to calculate at least one parameter characterizing the impact of solar radiations, based on the one or more timed series of values of the coefficient characterizing the intensity of solar radiations P_{rad}, and solar meteorological predictions.

In a number of embodiments of the invention, the sensor arrangement comprises the luminosity sensor 211 configured to obtain measured values Lₘₑₐₛ of luminosity intensity, and the one or more timed series of measured values Pₘₑₐₛ of intensity of one or more physical fields are one or more timed series of measured values Lₘₑₐₛ of luminosity intensity comprising solar luminosity intensity Lₛₒₗ, and wherein said coefficient characterizing the intensity of solar radiations P_{rad} is the solar luminosity intensity Lₛₒₗ.

In other embodiments of the invention, the sensor arrangement 200 comprises two temperature sensors located in two different locations within the sensor arrangement, and the measured values Pₘₑₐₛ of intensity of one or more physical fields are the measurements fo temperature from the two sensors.

In these embodiments of the invention, the coefficient characterizing the intensity of solar radiations P_{rad} may be a contribution Trad of solar radiation to the temperature sensed by one of the two temperature sensors. The processing logic 220, 221 can thus be configured to calculate the contribution Trad of solar radiation to the temperature sensed by one of the two temperature sensors based on the measurements of temperature from the two temperature sensor, based for example on the method explained with reference to figure 3b.

The invention is more generally applicable to any coefficient characterizing the intensity of solar radiations P_{rad} that may be calculated based of measurements of physical fields performed by sensors in the sensor arrangement. The description below relates to a coefficient characterizing the intensity of solar radiations P_{rad}, that may correspond, according to various embodiments of the invention, to solar luminosity intensity Lₛₒₗ, the contribution Trad of solar radiation to the temperature sensed by a temperature sensor, or any other relevant parameter that can be calculated based on measurements from sensors in the sensor arrangement.

The at least one parameter characterizing the impact of solar radiations may be any parameter that has an effect on the heating of the room due to solar radiation, or the luminosity measured by the luminosity sensor according to the position of the sun. This may be for example an orientation of the room, a position of the luminosity sensor in the room, a size and orientation of a window, a set of series of coefficients between predicted values of solar luminosity, and the amount of solar luminosity received, based on the sun orientation.

These parameters have a number of useful uses. For example, they can be used in a room temperature model, that allows predicting the evolution of the temperature in a room, based at least in part on the amount of sunlight that enters the room.

In an embodiment of the invention, this calculation is performed locally, and the communication link is an internal communication link to the processing logic 220. The at least one parameter can then be stored locally in the sensor arrangement for future use.

In other embodiments of the invention, this calculation is performed remotely by the external device 260, and the communication link to the processing logic is the communication link 250 to the external device 260. The at least one parameter may then be either used directly by the external device 260, or sent back by the external device 260 to the sensor arrangement 200 using the communication link 250, to be used by the sensor arrangement 200. This embodiment allows using complex calculations to determine the at least one parameter, since an external device 260 like a server may have significantly more computing power than the sensor arrangement 200.

The figures 5a, 5b, 5c, 5d represent respectively 4 rooms 500a, 500b, 500c and 500d. The room 500a has a window 501 a oriented to the South; the room 500b has a window 501 b oriented to the East; the room 500c has a window 501 c oriented to the West; the room 500d has a room 501 d oriented to the North.

The arrows 510a, 511a and 512a represent respectively the orientation of sunlight relative to the room 500a in the morning, at noon and in the evening. The arrows 510b, 511b and 512b represent respectively the orientation of sunlight relative to the room 500b in the morning, at noon and in the afternoon. The arrows 510c, 511 c and 512c represent respectively the orientation of sunlight relative to the room 500a in the morning, at noon and in the afternoon. The arrows 510d, 511 d and 512d represent respectively the orientation of sunlight relative to the room 500d in the morning, at noon and in the evening.

As can be seen in figure 5a, the sunlight enters directly the room 500a through the window 501 a all day long. As can be seen in figure 5b, the sunlight enters directly the room 500b in the morning only. As can be seen in figure 5c, the sunlight enters directly the room 500c in the evening only. As can be seen in figure 5d, the sunlight never enters directly the room 500d.

The figures 5a, 5b, 5c, 5d also display respectively four curves 520a, 520b, 520c and 520d, that represent respectively the evolution of the coefficient characterizing the intensity of solar radiations P_{rad} for the rooms 500a, 500b, 500c and 500d as a function of time for a sunny day. For each of the curves 500a, 500b, 500c, 500d, the horizontal axis represents the time, and the vertical axis represents the the coefficient characterizing the intensity of solar radiations P_{rad}. Thus, the highest the curve is, the most intense is the solar light. Meanwhile, the left of each curve represents the coefficient characterizing the intensity of solar radiations P_{rad}in the morning, the middle represents the coefficient characterizing the intensity of solar radiations P_{rad}around noon, and the right the coefficient characterizing the intensity of solar radiations P_{rad} in the afternoon/evening.

It can be seen in figure 5a that, for a sensor arrangement located in room 500a, the coefficient characterizing the intensity of solar radiations P_{rad} progressively increases in the morning, reaches a maximum 521 a around noon, and progressively decreases during the afternoon. Moreover, the solar coefficient characterizing the intensity of solar radiations P_{rad} remains fairly high all day long.

It can be seen in figure 5b that, for a sensor arrangement located in room 500b, the coefficient characterizing the intensity of solar radiations P_{rad} increases very quickly in the morning when the sun is in the East and the sunlight enters directly through window 501 b, reaches a maximum 521 b in the middle of the morning. The coefficient characterizing the intensity of solar radiations P_{rad} quickly decreases 522b at the end of the morning, when the sunlight starts not entering directly in the room through window 501 b, then slowly decreases 523b, when the orientation of the sun progressively moves away from the orientation of the window 501 b.

The curve 520c is nearly the opposite of curve 520b: for a sensor arrangement located in room 500c oriented to the West, the coefficient characterizing the intensity of solar radiations P_{rad} slowly increases 521 c until the afternoon, then quickly increases in the afternoon, when the solar light starts entering 512c in the room 500c, until reaching a maximum 523c at the end of the afternoon, then quickly decreasing 524c, in the afternoon until the sunset.

The curve 520d, for a sensor arrangement located in room 500d oriented to the North, shows that the coefficient characterizing the intensity of solar radiations P_{rad} is never high, and thus that the sun never enters the room. It can however be seen that the coefficient characterizing the intensity of solar radiations P_{rad} slowly increases in the morning 521 d, until reaching a maximum 522d around noon, then slowly decreasing in the end of the afternoon. This represents the evolution of ambient light luminosity, but not a direct entrance of sunlight in a room.

In a number of embodiments of the invention, the processing logic 220 or 221 uses timed series of measured values of Lₘₑₐₛ of luminosity intensity comprising solar luminosity intensity Lₛₒₗ to calculate the at least one parameter representative of the impact of solar radiations. As explained above, the values of solar luminosity intensities may be either the measured values Lₘₑₐₛ of luminosity intensities, or values calculated from the measured values Lₘₑₐₛ of luminosity intensities, in order to remove contributions to luminosity intensity that are not caused by the sunlight. Possible embodiments to determine solar luminosity Lₛₒₗ based on measured values Lₘₑₐₛ of luminosity intensities are discussed with reference to figure 2.

A large number of different embodiments are possible to calculate the at least one parameter characterizing the impact of solar radiations.

In an embodiment of the invention, the at least one parameter is the orientation of the room.

In an embodiment of the invention, the processing logic 220 or 221 is configured to calculate a time of a maximum of the coefficient characterizing the intensity of solar radiations P_{rad}, then calculate the orientation of the room based on the time of the maximum, and solar meteorological predictions. The solar meteorological predictions can be for example the orientation of the sun at different times of the day. Thus, the processing logic can determine what was the orientation of the sun at the time of the maximum of luminosity, and determine the orientation of the room accordingly.

For example, the processing logic 220 or 221 can determine from the curve 520a, that the maximum of the coefficient characterizing the intensity of solar radiations P_{rad}, for example luminosity for room 500a was around noon, then determine using solar meteorological predictions that, at this time, the sun was oriented South. In an embodiment of the invention, the orientation is expressed using predefined orientations such as "North", "South", "East", "West", "North-West", etc... In other embodiments of the invention, the orientation of the room can be expressed using an angle. For Example, it can be expressed using an angle of orientation in an angle reference frame that uses an orientation in degrees (from 0° to 360°) calculated clockwise from the direction of North. Thus, the processing logic 220 or 221 can determine what the angle of orientation of the sun at the time of the maximum is, and calculate the angle of orientation of the room as the angle of orientation of the sun at the time of the maximum value of intensity of the coefficient characterizing the intensity of solar radiations P_{rad}. Any suitable expression of orientation can thus be used. The processing logic 220 or 221 can also determine that, if the maximum value is below a threshold of luminosity, the sunlight does not enter directly in the room, and that the room is oriented North.

In a number of embodiments of the invention, the processing logic 220 or 221 determines if the sunlight enters directly in a room for each time, based on the sole value of coefficient characterizing the intensity of solar radiations P_{rad} at this time. For example, it can be configured to compare each value of the coefficient characterizing the intensity of solar radiations P_{rad} to a threshold, and determine that the sunlight enters directly in the room if the value of coefficient characterizing the intensity of solar radiations P_{rad} is above a threshold. It can thus determine when the sunlight enters directly in the room or not.

Furthermore, a higher threshold can be used, on the same principles, to determine the times at which the sensor arrangement is directly hit by sunlight. This allows determining the position of the sensor arrangement in the room. Indeed, the knowledge of the times at which the sensor is directly hit by sunlight allows determining the times at which the sun is aligned with each edge of a window, and the sensor arrangement, and thus the orientation of the sensor relative to two edges of the window. This allows, knowing the orientation of the window, to determine the relative position of the sensor in the room.

In a number of embodiments of the invention, all the values of the coefficient characterizing the intensity of solar radiations P_{rad} are compared to a fixed threshold, which is fairly representative of the direct entrance of sunlight in the room. In other embodiments of the invention, each value can be compared to a different threshold that represents the limit of values of the coefficient characterizing the intensity of solar radiations P_{rad} when the sunlight enters directly in the room, at different times of the day.

However, using the same thresholds or computation of a maximum value every day may alter the precisions of results, because that would not take into account the natural variations of sun radiations, which are due for example to the season, or meteorological conditions such as the cloud coverage.

In a number of embodiments of the invention, the thresholds are thus adapted based on meteorological predictions for a given day. For example, the thresholds may be lower in winter than in summer, or when the sun radiations diminishes due to the presence of clouds. The thresholds can be adapted on a daily basis (i.e be lower for cloudy than for sunny days), or even on a hourly basis, or using any suitable time period. According to various embodiments of the invention, the meteorological predictions may be received from an online service. In embodiments wherein the processing logic is the processing logic 220 in the sensor arrangement 200, the meteorological predictions may be received through the gateway 270 using the first link 251 and the second link 252. The meteorological predictions may be received in different way, either periodically or on demand. A skilled man may implement any suitable method for accessing meteorological predictions, provided that the processing logic 220 or 221 has access to an online service of meteorological predictions.

In some embodiments of the invention, the values of the coefficient characterizing the intensity of solar radiations P_{rad} are pre-processed, by applying to them a factor to correct the effect of cloud coverage, or other parameters having an influence on the sun radiations, such as levels of pollution. For example, the processing logic 220 or 221 receives timed meteorological predictions of cloud coverage, or other suitable meteorological parameters. The processing logic 220 or 221 calculates, based on these predictions, a correction coefficient for each value of the coefficient characterizing the intensity of solar radiations P_{rad}, in order to obtain the value of the coefficient characterizing the intensity of solar radiations P_{rad} that would be measured if there were no meteorological factor (clouds, pollution...) diminishing the solar radiations. The processing logic 220 or 221 can then calculate the at least one parameter representative of the impact of solar radiations without relying on values of solar intensity biased by the presence of meteorological elements such as clouds.

Figure 6 displays a flow chart of a method to determine at least one parameter characterizing the impact of solar radiations according to the invention in some of its embodiments.

The method 600 is a method to determine at least one parameter characterizing the impact of solar radiations.

The method 600 comprises a first step 610 of using one or more sensors to obtain measured values Pₘₑₐₛ of intensity of one or more physical fields, said measured values of intensity of one or more physical fields being dependent upon the amount of solar radiations that hit the sensor arrangement.

In a number of embodiments of the invention, the first step 610 consists in using a luminosity sensor in a sensor arrangement to obtain measured values of luminosity intensity Lₘₑₐₛ, and said one or more timed series of values of a parameter characterizing solar radiations P_{rad} are one or more timed series of measured values of Lₘₑₐₛ of luminosity intensity comprising solar luminosity intensity Lₛₒₗ, and solar meteorological predictions.

In a number of embodiments of the invention, the method 600 comprises an intermediary step 611, after the first step 610, calculating values of solar luminosity intensity Lₛₒₗ based on said measured values of luminosity intensities Lₘₑₐₛ. The calculation of values of solar luminosity intensity Lₛₒₗ based on measured values of Lₘₑₐₛ of luminosity intensity can be performed in different ways, that have been discussed with reference to figure 2.

The method 600 comprises a second step 620 of calculating said at least one parameter characterizing the impact of solar radiations, based on said one or more timed series of values of a parameter characterizing solar radiations P_{rad}" and solar meteorological predictions, said values of a coefficient characterizing the intensity of solar radiations (P_{rad}) being obtained based on said measured values

(Pₘₑₐₛ) of intensity of one or more physical fields. In embodiments wherein said coefficient characterizing the intensity of solar radiations (P_{rad}) is the luminosity intensity Lₛₒₗ, the values of the solar luminosity intensity Lₛₒₗ may be the measured values of luminosity intensity Lₘₑₐₛ, or values of solar luminosity intensity Lₛₒₗ calculated based on values of luminosity intensity Lₘₑₐₛ at the intermediary step 611.

All the embodiments discussed above are applicable to the method 600. For example the sensor arrangement may comprise two temperature sensors, and the coefficient characterizing the intensity of solar radiations P_{rad} may be a contribution Trad of solar radiations hitting directly the housing of the sensor arrangement to the temperature sensed by one of the temperature sensors, Trad being based on the temperature sensed by these temperature sensors.

The examples described above are given as illustrations of embodiments of the invention. They do not in any way limit the scope of the invention which is defined by the following claims.

## Claims

1. A sensor arrangement (200) to determine an effective indoor temperature (Tᵢₙ) of a room, the sensor arrangement comprising:
- a first sensor (210) configured to obtain a measured temperature (Tₘₑₐₛ);
- a second sensor (311) configured to obtain measured values (Pₘₑₐₛ) of intensity of a physical field;
- a processing logic (220, 221) configured to calculate the effective indoor temperature (Tᵢₙ) of the room, based on the measured temperature (Tₘₑₐₛ) and said measured values (Pₘₑₐₛ) of intensity of a physical field.

2. The sensor arrangement of claim 1, wherein the effective indoor temperature (Tᵢₙ) of the room is the sum of all contributions to the measured temperature (Tₘₑₐₛ) except a direct impact (Trad) of solar radiation to the sensor arrangement.

3. The sensor arrangement of claim 1, wherein the processing logic is configured to calculate a direct impact (Trad) of solar radiation to the measured temperature, based at least on said measured values (Pₘₑₐₛ) of intensity of the physical field, and calculate the effective indoor temperature (Tᵢₙ) by substracting said direct impact (Trad) of solar radiation from said measured temperature (Tₘₑₐₛ).

4. The sensor arrangement of one of claims 1 to 3, wherein said second sensor is a second temperature sensor (311 b) located in a position in the sensor arrangement different from the position of the first sensor, and said measured values (Pₘₑₐₛ) of intensity of the physical field are temperatures measured by said second sensor (Tₘₑₐₛ₂).

5. The sensor arrangement of one of claims 1 to 3, wherein said second sensor is a luminosity sensor (211), and said measured values (Pₘₑₐₛ) of intensity of the physical field are values measured values of (Lₘₑₐₛ) of luminosity intensity comprising solar luminosity intensity (Lₛₒₗ).

6. The sensor arrangement of claim 4, wherein a relationship between values of solar luminosity intensity (Lₛₒₗ) and the direct impact (Trad) of solar radiation to the measured temperature is calculated during a training phase, said training phase comprising comparing temperature differences (T_{diff}) between two measured temperatures, with and without solar radiations, and corresponding values of solar luminosity intensity (Lₛₒₗ).

7. A sensor arrangement (200) to determine at least one parameter characterizing the impact of solar radiations, said sensor arrangement comprising:
- one or more sensors configured to obtain measured values (Pₘₑₐₛ) of intensity of one or more physical fields, said measured values of intensity of one or more physical fields being dependent upon the amount of solar radiations that hit the sensor arrangement;
- a communication link configured to send one or more timed series of measured values (Pₘₑₐₛ) of intensity of one or more physical fields to a processing logic (220, 221), said processing logic configured to:
∘ obtain timed series of a coefficient characterizing the intensity of solar radiations (P_{rad}) based on said one or more timed series of measured values (Pₘₑₐₛ) of intensity of one or more physical fields, and
o calculate said at least one parameter characterizing the impact of solar radiations, based on the one or more timed series of values of the coefficient characterizing the intensity of solar radiations (P_{rad}), and solar meteorological predictions.

8. The sensor arrangement of claim 7, wherein said at least one parameter characterizing the impact of solar radiations is an orientation of the room.

9. The sensor arrangement of claim 8, wherein the processing logic is configured to calculate a time of a maximum of one or more timed series of values of the coefficient characterizing the intensity of solar radiations (P_{rad}), and calculate an orientation of said room based on said time of the maximum of said one or more timed series of said values of a coefficient characterizing the intensity of solar radiations (P_{rad}), and solar meteorological predictions.

10. The sensor arrangement of claim 9, wherein said processing logic is further configured to determine whether sunlight enters directly in the room based on an intensity of said value of the maximum of said one or more timed series of said values of a coefficient characterizing the intensity of solar radiations (P_{rad}).

11. The sensor arrangement of one of claims 7 to 10, comprising a luminosity sensor (211) configured to obtain measured values (Lₘₑₐₛ) of luminosity intensity, said one or more timed series of measured values (Pₘₑₐₛ) of intensity of one or more physical fields are one or more timed series of measured values (Lₘₑₐₛ) of luminosity intensity comprising solar luminosity intensity (Lₛₒₗ), and wherein said coefficient characterizing the intensity of solar radiations (P_{rad}) is solar luminosity intensity (Lₛₒₗ).

12. The sensor arrangement of one of claims 5, 6 or 11, wherein said values of solar luminosity intensity (Lₛₒₗ) are said measured values of luminosity intensity (Lₘₑₐₛ).

13. The sensor arrangement of claim 12, wherein said luminosity sensor is configured to measure luminosity at a wavelength representative of solar light.

14. The sensor arrangement of one of claims 5, 6 or 11, wherein said processing logic is configured to calculate values of solar luminosity intensity (Lₛₒₗ) based on said measured values of solar intensities (Lₘₑₐₛ).

15. The sensor arrangement of claim 14, wherein said processing logic is configured to calculate a contribution of artificial light (Lₐₙ) to the measured values of luminosity intensities (Lₘₑₐₛ), and calculate the values of solar luminosity intensity (Lₛₒₗ), by at least removing said contribution of artificial light (Lₐᵣₜ) from the measured values of luminosity intensities (Lₘₑₐₛ).

16. The sensor arrangement of claim 15, wherein said processing logic is configured to:
- calculate a speed of change of the measured values of luminosity intensities (Lₘₑₐₛ);
- determine, based on said speed of change of the measured values of luminosity intensities (Lₘₑₐₛ), if a change of the measured values of luminosity intensities is due to artificial light;
- if the change of the measured values of luminosity intensities is due to artificial light, calculate the contribution of artificial light (Lₐᵣₜ) to the measured values of luminosity intensities (Lₘₑₐₛ).

17. A method (400) to determine an effective indoor temperature (Tᵢₙ) of a room, said method comprising:
- using (410) a first sensor to obtain a measured temperature (Tₘₑₐₛ);
- using (420) a second sensor to obtain measured values (Pₘₑₐₛ) of intensity of a physical field;
- calculating (430) said effective indoor temperature (Tᵢₙ) of the room, based on said measured temperature (Tₘₑₐₛ) and said measured values (Pₘₑₐₛ) of intensity of a physical field.

18. The method of claim 17, wherein said second sensor is luminosity sensor, and said measured values (Pₘₑₐₛ) of intensity of the physical field are configured to obtain values measured values of (Lₘₑₐₛ) of luminosity intensity comprising solar luminosity intensity (Lₛₒₗ).

19. A method (600) to determine at least one parameter characterizing the impact of solar radiations, said method comprising:
- using (610) one or more sensors to obtain measured values (Pₘₑₐₛ) of intensity of one or more physical fields, said measured values of intensity of one or more physical fields being dependent upon the amount of solar radiations that hit the sensor arrangement;
- calculating (620) said at least one parameter characterizing the impact of solar radiations, based on said one or more timed series of values of a coefficient characterizing the intensity of solar radiations (P_{rad}), and solar meteorological predictions, said values of a coefficient characterizing the intensity of solar radiations (P_{rad}) being obtained based on said measured values (Pₘₑₐₛ) of intensity of one or more physical fields.

20. The method of claim 19, comprising using a luminosity sensor in a sensor arrangement to obtain measured values of luminosity intensity (Lₘₑₐₛ), and wherein said one or more timed series of values of a coefficient characterizing the intensity of solar radiations (P_{rad}) are one or more timed series of measured values of (Lₘₑₐₛ) of luminosity intensity comprising solar luminosity intensity (Lₛₒₗ), and solar meteorological predictions.

21. The method of one of claims 18 or 20, wherein said values of solar luminosity intensity (Lₛₒₗ) are said measured values of luminosity intensity (Lₘₑₐₛ).

22. The method of one of claims 18 or 20, further comprising an intermediary step (421, 611) of calculating values of solar luminosity intensity (Lₛₒₗ) based on said measured values of luminosity intensities (Lₘₑₐₛ).
